# EUROPEAN PATENT APPLICATION

(11) **EP 2 829 936 A1**
(43) Date of publication of application: **28.01.2015**
(21) Application number: 14177862.1
(22) Date of filing: 21.07.2014
(51) Int. Cl.: G05D 1/00, G05D 1/02, B64C 39/02, G06F 3/16, G10L 15/00

(54) **System for Controlling and Communicating with Aircraft**

(30) Priority: 22.07.2013 US 201313947809
(71) Applicant: Sikorsky Aircraft Corporation, Stratford, CT 06615 (US)
(72) Inventor: Thomas Zygmant, CT, 06890 Southport (US); Jesse J. Lesperance, AL, 35805 Huntsville (US); Ira E. Zoock, CT, 06477 Orange (US); James A. Kelly, CT, 06762 Middlebury (US)
(74) Representative: Klunker . Schmitt-Nilson . Hirsch

(57) **Abstract**

A ground-based aircraft control system including at least one data receiver/transmitter module configured to transmit aircraft control and data signals to an aircraft to control the flight of the aircraft and to receive data signals from the aircraft. At least one controller including a voice command recognition module configured to receive voice commands, to generate control signals based on the voice commands, and to transmit the control signals and command audio signals to the aircraft via the at least one data receiver/transmitter module. The at least one controller is configured to receive non-command voice audio signals and to transmit the non-command voice audio signals to the aircraft via the at least one data receiver/transmitter module.

## Description

The subject matter disclosed herein relates to aircraft control and communication systems and in particular to a system for remotely controlling and transmitting audio and data signals to and from an aircraft.

Remotely-controlled aircraft receive aircraft control signals from ground-based locations to control the flight of the aircraft. Aircraft may be entirely remotely controlled or optionally remotely-controlled. An optionally-controlled aircraft may have a pilot in the aircraft that may selectively control the flight of the aircraft or other operations of the aircraft.

Conventional systems for controlling aircraft may suffer from inflexibility in aircraft control and awareness for the operators. For example, a ground-based operator may need to use his hands to perform a non-control related task, making control of the aircraft during that time difficult. In addition, the pilot of optionally-controlled aircraft and other ground crew may lack information pertaining to the flight due to communications not being relayed to the aircraft and other operators in the area.

According to one aspect of the invention, a ground-based aircraft control system including at least one data receiver/transmitter module configured to transmit aircraft control and data signals to an aircraft to control the flight of the aircraft and to receive data signals from the aircraft. At least one controller including a voice command recognition module configured to receive voice commands, to generate control signals based on the voice commands, and to transmit the control signals to the aircraft via the at least one data receiver/transmitter module. The at least one controller is configured to receive non-command voice audio signals and to transmit the non-command voice audio signals to the aircraft via the at least one data receiver/transmitter module.

Particular embodiments may include any of the following optional features, alone or in combination:
The controller may be configured to transmit both audio signals of the voice commands and the control signals to the aircraft based on receiving the voice commands.

The ground-based aircraft control system further may comprise a user interface module including an actuator controllable by a user to select a voice command recognition mode and a non-command voice recognition mode, such that the at least one controller analyzes audio signals for voice commands in the voice command recognition mode, and the at least one controller transmits the audio signals to the at least one data receiver/transmitter module without analyzing the audio signals for voice commands in the non-command voice recognition mode, wherein particularly the user interface module may include input mechanisms for a user to plan flights, input aircraft commands, display sensor data, makes selections, and input controller-centric commands, such that the at least one controller analyzes the inputs, and the at least one controller transmits the signals to the at least one data receiver/transmitter module.

The at least one data receiver/transmitter module may be configured to transmit aircraft control signals to the aircraft and to receive status and other data, and the ground-based aircraft control system further comprises a radio module configured to transmit and receive the audio signals to and from the aircraft.

The radio module may be configured to transmit both audio signals corresponding to the voice recognition commands and to transmit and receive the non-command voice audio signals to a pilot audio system of the aircraft.

The ground-based aircraft control system further may comprise a voice command recognition headset including a microphone to receive voice commands from a user and a speaker to output audio to the user; and a user interface module including an actuator controllable by the user to select a voice command recognition mode and a non-command voice recognition mode.

Transmitting both the aircraft control signal and the voice command may include transmitting the aircraft control signal via a first data receiver/transmitter antenna and transmitting the voice command via the first data transmission antenna or a second data transmission antenna. The second data transmission antenna may be a very high frequency (VHF) radio antenna.

The voice recognition headset may contain a speaker to transmit audio from the pilot, from text to speech conversion audio, and audible tones from controller implemented notifications.

According to another aspect of the invention, an aircraft control system includes an aircraft including an aircraft control system to control the flight of the aircraft, aircraft sensors, at least one aircraft-based receiver/transmitter module, and a pilot audio system to provide audio to a human pilot of the aircraft and to transmit the audio to the ground-based aircraft control system. The aircraft control system also includes a ground-based aircraft control system configured to generate aircraft control signals to control the flight of the aircraft. The ground control system (GCS) includes at least one ground-based receiver/transmitter module configured to transmit the control signals from the ground control system to the aircraft control system, to receive sensor or other data from the aircraft, and to transmit audio signals to the pilot audio system and receive pilot audio. The ground control system also includes a controller including a voice recognition system command module configured to analyze the audio signals to detect predetermined voice commands, to generate the control signals based on detecting the predetermined voice commands in the audio signals, and to transmit to the at least one receiver/transmitter module each of the audio signals and the control signals to transmit to the aircraft.

Particular embodiments may include any of the following optional features, alone or in combination:
The controller further may be configured to detect a state of a communication mode, to analyze the audio signals to detect the predetermined voice commands, and to transmit the aircraft control signals and the audio signals to the at least one ground-based receiver/transmitter module to transmit to the pilot audio system based on detecting a voice-command recognition state of the communication mode signal.

The ground-based aircraft control system further may comprise a user interface module including an actuator controllable by a user to select between a voice command recognition mode and a non-command voice mode, wherein the controller analyzes the audio signals for the predetermined voice commands in the voice command recognition mode, and the controller transmits the audio signals to the at least one ground-based receiver/transmitter module without analyzing the audio signals for the predetermined voice commands in the non-command voice mode.

The at least one data receiver/transmitter module may be configured to transmit aircraft control signals to the aircraft and receive data from the aircraft and other sources, and the aircraft control system further comprises a radio module configured to transmit the audio signals to the aircraft and receive audio from the aircraft and other sources.

The radio module may be configured to transmit both audio signals corresponding to the predetermined voice recognition commands and non-command voice audio signals to a pilot audio system of the aircraft.

The ground-based aircraft control system further may comprise a voice command recognition headset including a microphone to generate the audio signals based on receiving an acoustic input from a user and a speaker to output audio to the user; a user interface module including an actuator controllable by the user to select a voice command recognition mode and a non-command voice recognition mode; and a text-to-speech converter to convert text to speech and including an audible generator to provide audible notifications to the user.

Transmitting both the aircraft control signal and the voice command may include transmitting the aircraft control signal via a first data receiver/transmitter antenna and transmitting the voice command via the first data transmission antenna or a second data transmission antenna. The second data transmission antenna may be a very high frequency (VHF) radio antenna.

The voice recognition headset may contain a speaker to transmit audio from the pilot, from text to speech conversion audio, and audible tones from controller implemented notifications.

According to another aspect of the invention, a method of communicating with an aircraft includes detecting a communications mode of a ground-based control system configured to control an aircraft, where the aircraft includes a pilot audio system to provide acoustic signals to a pilot. The method includes detecting a voice command in an audio signal based on detecting a voice command recognition mode of the ground-based control system and transmitting both an aircraft control signal and the voice command corresponding to the aircraft control signal to the aircraft based on detecting the voice command. The method also includes transmitting non-command voice communications to the aircraft based on detecting a non-command voice recognition mode of the ground-based control system.

Particular embodiments may include any of the following optional features, alone or in combination:
No aircraft control signals corresponding to the non-command voice communications may be transmitted to the aircraft.

Detecting the voice command communications mode may include determining a physical position of at least one actuator of a user interface module.

Transmitting both the aircraft control signal and the voice command may include transmitting the aircraft control signal via a first data receiver/transmitter antenna and transmitting the voice command via the first data transmission antenna or a second data transmission antenna.

The second data transmission antenna may be a very high frequency (VHF) radio antenna.

The voice recognition headset may contain a speaker to transmit audio from the pilot, from text to speech conversion audio, and audible tones from controller implemented notifications.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates an aircraft control and communication system according to an embodiment of the invention;
FIG. 2 illustrates a ground-based aircraft control and communication system according to an embodiment of the invention;
FIG. 3 illustrates a voice communication and command flow diagram of a method according to an embodiment of the invention; and
FIG. 4 illustrates an audio and data flow diagram of a method according to another embodiment of the invention.

The detailed description explains embodiments of the invention, together with advantages and features, by way of example with reference to the drawings.

Conventional aircraft control and communications systems may suffer from inflexibility in providing ground-based controllers with different ways of controlling an aircraft, insufficient operator awareness, and may limit pilots of optionally-controlled aircraft and other ground operators in the area from receiving ground-based communications. Embodiments of the invention relate to aircraft control and communications systems that transmit control signals and audio signals to an aircraft.

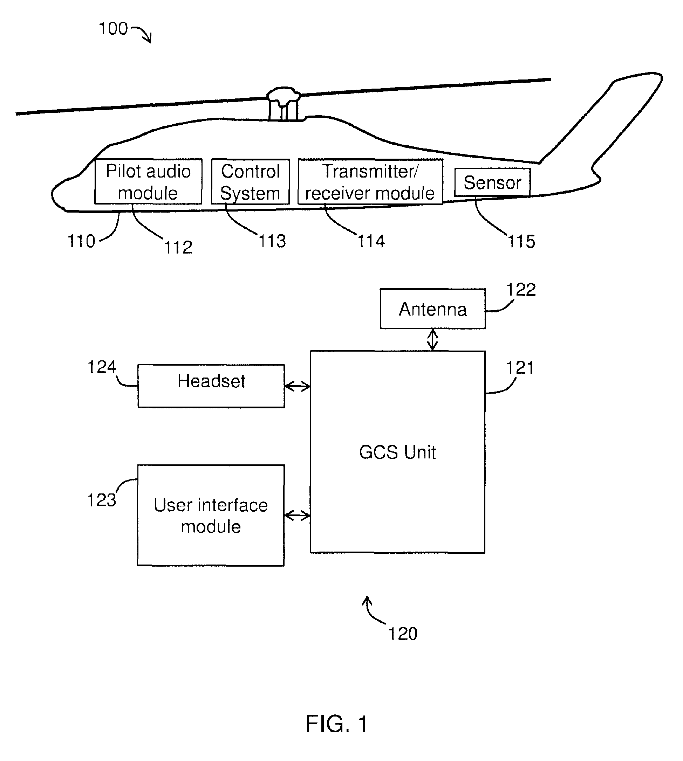

FIG. 1 illustrates an aircraft control and communication system 100 according to an embodiment of the invention. The system 100 includes an aircraft 110 and a ground-based control and communication system 120. The aircraft 110 includes a pilot audio module 112 to provide acoustic signals to a human pilot. The pilot audio module 112 may include speakers to provide acoustic signals to the pilot, processing circuitry to process audio signals to generate acoustic signals, and antenna or other data input devices to receive wireless audio signals from the ground-based control and communication system 120. The pilot audio module 112 includes microphones to provide the ability to capture the acoustics or voice of the pilot and transmit the audio signals to the ground-based control and communication system 120

The system 100 includes an aircraft control system 113 to receive control signals and to control the flight of the aircraft based on the control signals. The aircraft control system 113 may receive commands from both the pilot in the aircraft 110 and from the ground-based control and communication system 120. The aircraft control system 113 may be configured to operate in a ground-control mode, a pilot-control mode or a mixed ground-control and pilot-control mode. The aircraft system 110 includes at least one wireless data handling module, also called receiver/transmitter module, 114 to receive and transmit control signals, and audio to and from the ground-based control and communication system 120. The aircraft 110 also may include sensor(s) 115 that capture live data to transmit to the ground control and communication system 120 via the receiver/transmitter module 114. The aircraft 110 includes other systems, including electrical, hydraulic, mechanical, and propulsion systems. However, these systems are omitted from FIG. 1 for purposes of clarity in describing embodiments of the invention.

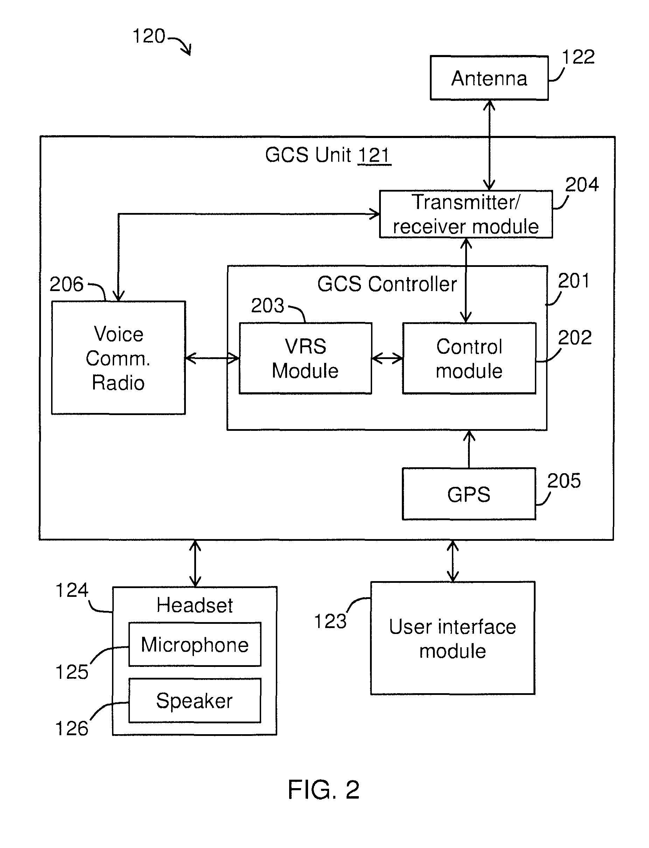

The ground-based control and communications system 120 includes a ground control system (GCS) unit 121, antenna 122, user interface module 123, and audio system headset 124. The ground-based control and communications system 120 is described in further detail in FIG. 2.

The GCS unit 121 includes a GCS controller 201. The controller 201 includes processors, memory and other supporting circuitry that make up a non-voice recognition system (VRS) control module 202 and a VRS module 203. The non-VRS control module 202 and the VRS module 203 may each include software modules executed by the processor of the GCS controller 201, or the modules 202 and 203 may include separate circuit elements including separate processors, memory and/or logic components. The non-VRS control module controls operations of the GCS unit 121 that do not correspond to the voice recognition functions of the GCS unit 121. Examples of non-VRS operations include communications between a ground operator and a pilot, communications between the ground operator and other entities, display functions, audio output functions of the ground-based aircraft control system 120, position-determination functions and any other non-VRS operation.

The GCS unit 121 also includes a receiver/transmitter module 204 configured to transmit data, including control signals, from the non-VRS control module 202 to the antenna 122 and receive data from the aircraft including operating parameters, sensor data, video, and Caution/Advisory/Warnings. The antenna 122 may be a high-powered antenna, such as a military-grade antenna capable of transmitting a signal over large distances, such as over a distance of multiple miles. The receiver/transmitter module 204 is also configured to transmit and/or receive video signals to and/or from the aircraft. The GCS unit 121 also includes a global positioning system (GPS) module 205, or other geographic positioning or mapping module. The GCS unit 121 also includes a voice communications radio 206 configured to generate and receive wireless signals. The voice communications radio 206 may be a VHF radio, or any other radio.

In operation, an operator uses the user interface module 123 to select an operating mode of the ground-based aircraft control system 120. In one embodiment, the user interface module 123 includes input mechanisms for a user to plan flights, input aircraft commands, display sensor data, makes selections, and input controller-centric commands, such that the GCS controller 201 analyzes the inputs and transmits the signals to the receiver/transmitter module 204 if required.

Examples of operating modes include a voice command recognition mode, a non-command communication mode, and a non-communication mode. When a user selects the voice command recognition mode, the user speaks into the microphone 125, which converts acoustic waves into audio signals, and the VRS headset 124 transmits the audio signals to the VRS module 203. The VRS module 203 filters out the voice audio from environmental noise and analyzes the audio and generates aircraft control signals based on recognizing predetermined voice commands among the audio signals. In one embodiment, the VRS module 203 includes a list of pre-defined voice commands and associated aircraft control signals. The VRS module 203 compares the received audio signals to the list of predetermined aircraft control commands. In one embodiment, the VRS module 203 outputs the aircraft control signals directly to the receiver/transmitter module 204, which transmits the signals to the antenna 122. In another embodiment, the VRS module 203 generates an identifier corresponding to the particular command identified in the audio signals and transmits the identifier to the non-VRS control module 202, which generates the aircraft control signals.

In addition, the non-VRS control module 202 controls the VHF ground radio to transmit to a pilot of the aircraft the filtered audio from the VRS voice command. The audio signals may be converted into acoustic waves by speakers such that the pilot of the aircraft may be alerted accordingly to maneuvers that will be performed by the aircraft as a result of the to remote voice commands.

If the GCS controller 201 determines that the user has selected a non-VRS mode, the controller 201 may still transmit audio signals to the pilot of the aircraft. For example, if the user of the user interface module 123 selects a non-VRS communications mode, the non-VRS communications may be sent to the pilot to provide the pilot with operational intelligence, or information regarding the state of the users on the ground, of the environment or any other information that may be relevant to the pilot.

In embodiments of the invention, the voice communications radio 206 transmits audio signals to an aircraft in both a VRS mode and a non-VRS mode. This allows a pilot of the aircraft to be aware of control signals that are being provided to the aircraft to automatically pilot the aircraft from the ground, as well as to permit direct communications between the pilot and a ground operator, and to inform the pilot regarding events or conditions on the ground.

In an embodiment of the invention, the VRS headset 124 includes a noise-cancelling filter to filter out environmental noise, including aircraft sounds. In one embodiment, the GCS unit 121 is a portable and mobile assembly that may be placed on the back of a ground operator, the VRS headset 124 is a headset that may be worn on the head of the ground operator, the user interface module 123 is a device that may be carried in the hand of the ground operator, and the antenna 122 is a structure physically and electrically connected to the GCS unit 121 that is moveable by the ground operator together with the GCS unit 121.

While FIG. 2 illustrates a GCS unit 121 as a structure for housing the GCS controller 201 and voice communications radio 206, and to which the VRS headset 124, user interface module 123 and antenna 122 are connected, embodiments of the invention encompass any ground-based device, assembly or structure, including mobile, semi-mobile and immobile devices, assemblies and structures. Examples of mobile devices or assemblies include backpacks, wheeled modules, vehicles and other packs that may be carried, moved or driven by a ground operator. The components illustrated in FIG. 2 as being part of the GCS unit 121 may be physically connected to each other or may be physically distributed among different structures, such as among different computers in a computer network or wireless network.

In addition, while FIG. 2 illustrates a voice communications radio 206 incorporated in the GCS unit 121 for communicating with a pilot audio system of an aircraft, any wireless communication system may be used to transmit audio signals to the aircraft, including optical communications system, AM, FM, VHF, UHF, or any other wireless communications system. In another embodiment, audio signals are transmitted between the aircraft and the GCS unit 121 via the receiver/transmitter module 204.

Embodiments of the invention encompass a ground-based aircraft control system configured to transmit and receive audio signals, receive sensor data and aircraft parameters, and transmit control signals to an aircraft. The ground-based aircraft control system may transmit and receive the audio, receive sensor data and aircraft parameters, and transmit control signals via the same antenna or via different antennas or wireless data transmission devices.

The control system is capable of operating in both a voice command recognition mode and a non-command voice recognition mode. The system transmits audio signals to a pilot of the aircraft in each mode, but only detects voice commands when operating in the voice command recognition mode. When operating in the voice command recognition mode, the system generates aircraft control signals based on detected voice commands, and transmits both the voice commands and the corresponding control signals to the aircraft. The voice commands may be converted to acoustic signals to permit the pilot to hear the commands being provided to the aircraft.

The ground-based aircraft control system includes a controller including an actuator, such as a switch, button, lever, touch-screen, or any other actuator that is controllable by a ground operator to select a voice command recognition mode and a non-command voice recognition mode. The controller also includes a push-to-talk button to permit the ground operator to control communications that are transmitted to the aircraft or to other ground operators or vehicles.

While embodiments of the invention have been described with respect to an aircraft, such as a helicopter or an airplane, it is understood that embodiments correspond to any remotely-controllable vehicle that includes a pilot, passengers, other ground operators that are capable of receiving and listening to acoustic signals, which may be voice commands or non-command voice communications.

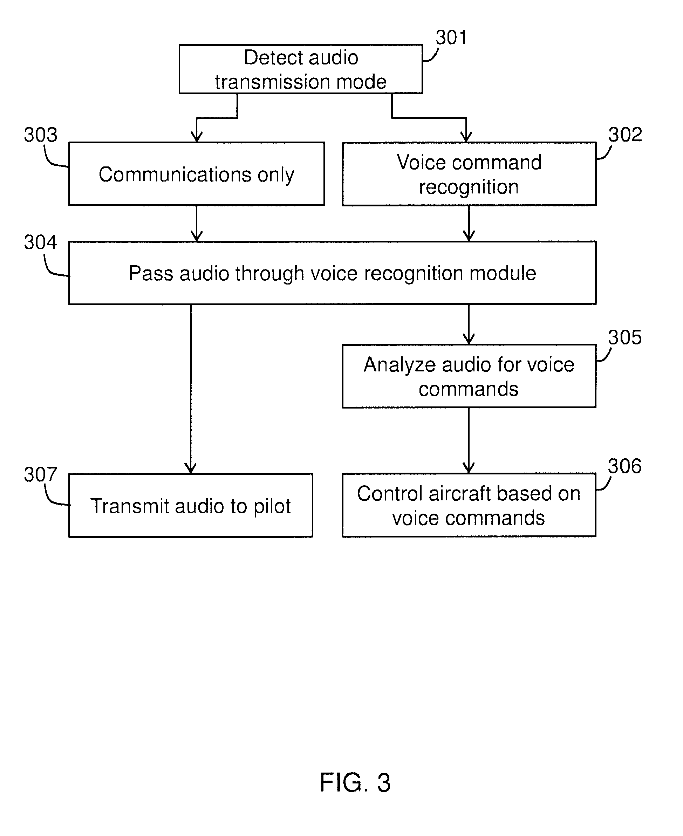

Embodiments of the invention also encompass a method of communicating with and controlling an aircraft, as illustrated in the flow diagram of FIG. 3.

In block 301, an audio transmission mode is detected. In block 302, it is determined that the voice command recognition mode is selected, and in block 303 it is determined that the audio communications mode corresponds to communications only and not to voice command recognition. The audio transmission mode may be detected by detecting the state of a switch, button or other actuator controlled by a ground operator. In some embodiments, the actuator is a software state controlled by an electronic input, such as a key-press of a keypad, a touch-screen contact or any other digital input. When the actuator is in a first position (or a memory location has a value corresponding to a first state), the voice command recognition mode is detected in block 302. When the actuator is in a second position, the communications only mode is detected in block 303. While only two modes are described in FIG. 3 for purposes of describing an embodiment of the invention, it is understood that other modes may exist (such as a non-communications mode). The audio signals may be generated by a microphone connected to a GCS unit including a voice recognition module.

Upon determination of the audio transmission mode in block 301, the audio is directed to one of two paths. When it is determined that the voice command recognition mode is activated in block 302, the audio signals received by the ground-based aircraft control system passed through a voice recognition module in block 304. In particular, the signals are filtered of ambient noise by the VRS module and analyzed in block 305 for voice commands. In one embodiment, the audio signals are fed through the voice recognition module and compared with pre-defined or predetermined voice commands. Each pre-defined or predetermined voice command is associated with aircraft control signals. In block 306, a control command is sent to the aircraft based on the voice commands. In particular, the aircraft control signals associated with the voice commands are transmitted to the aircraft to control the operation of the aircraft. In block 307, the audio signals are transmitted to a pilot of the aircraft. The audio signals may be transmitted by a VHF antenna or any other wireless transmitter.

When it is determined in block 303 that the communications only mode is activated, the audio signals received by the ground-based aircraft control system are passed through the voice recognition module in block 304 to be filtered of ambient noise. However, the audio signals are not analyzed for voice commands. In block 307, the audio is transmitted to the pilot.

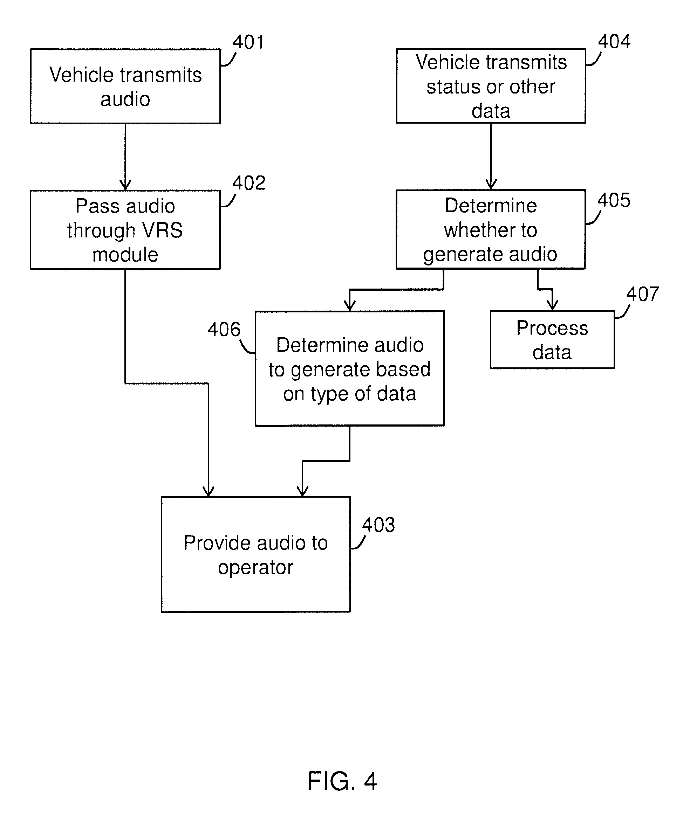

FIG. 4 illustrates the potential sources of audio that may be provided to an operator of a ground control system, such as the GCS unit 121 of FIG. 1. In block 401, a vehicle, such as an aircraft, transmits audio to the operator. The audio may be pilot voice audio, for example. In block 402, this audio is passed through a voice recognition module for audio filtering. This audio may be received via the receiver/transmitter module 204 or the voice communications radio 206, for example. The audio may be processed by the GCS controller 201 before being provided to the operator using the audio headset speaker 126. After passing through the voice recognition module for filtering, the audio is provided to the operator in block 403.

Another avenue for audio to be provided to the controller is from data that originates as non-audio data. In block 404, the vehicle, such as the aircraft, may transmit aircraft data, such as a status or health parameter to the ground control system associated with the operator. In block 405, the ground control system determines whether to generate audio associated with the data. Generated audio may include a tone, digitally-created verbal message associated with the data, a text-to-speech audio, or any other digitally-generated audio signals. If it is determined that an audio signal should be generated, then the audio signal is generated in block 406 and provided to the operator in block 403. If not, then the data may be processed in block 407, such as by storing the data, transmitting the data to another operator or system, discarding the data, or performing any other processing on the data.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims

The present invention was developed in part with funding from the U.S. Army under Contract # W58RGZ-06-D0045. The United States Government has certain rights in this invention..

## Claims

1. A ground-based aircraft control system, comprising:
at least one data transmission/receiver module configured to transmit aircraft control and data signals to an aircraft to control the flight of the aircraft and to receive data signals from the aircraft; and at least one controller including a voice command recognition module configured to receive voice commands, to generate control signals based on the voice commands, and to transmit the control signals to the aircraft via the at least one data receiver/transmitter module, the at least one controller further configured to receive non-command voice audio signals and to transmit the non-command voice audio signals to the aircraft via the at least one data receiver/transmitter module.

2. The ground-based aircraft control system of claim 1, wherein the controller is configured to transmit both audio signals of the voice commands and the control signals to the aircraft based on receiving the voice commands.

3. The ground-based aircraft control system of claim 1 or 2, further comprising:
a user interface module including an actuator controllable by a user to select a voice command recognition mode and a non-command voice recognition mode, such that the at least one controller analyzes audio signals for voice commands in the voice command recognition mode, and the at least one controller transmits the audio signals to the at least one data receiver/transmitter module without analyzing the audio signals for voice commands in the non-command voice recognition mode,
wherein particularly the user interface module includes input mechanisms for a user to plan flights, input aircraft commands, display sensor data, makes selections, and input controller-centric commands, such that the at least one controller analyzes the inputs, and the at least one controller transmits the signals to the at least one data receiver/transmitter module.

4. The ground-based aircraft control system of any of claims 1 to 3, wherein the at least one data receiver/transmitter module is configured to transmit aircraft control signals to the aircraft and to receive status and other data, and
the ground-based aircraft control system further comprises a radio module configured to transmit and receive the audio signals to and from the aircraft.

5. The ground-based aircraft control system of claim 4, wherein the radio module is configured to transmit both audio signals corresponding to the voice recognition commands and to transmit and receive the non-command voice audio signals to a pilot audio system of the aircraft.

6. The ground-based aircraft control system of any of claims 1 to 5, further comprising:
a voice command recognition headset including a microphone to receive voice commands from a user and a speaker to output audio to the user; and
a user interface module including an actuator controllable by the user to select a voice command recognition mode and a non-command voice recognition mode.

7. An aircraft control system, comprising:
a ground-based aircraft control system according to any of the previous claims; and
an aircraft including an aircraft control system to control the flight of the aircraft, aircraft sensors, at least one aircraft-based receiver/transmitter module, and a pilot audio system to provide audio to a human pilot of the aircraft and to transmit the audio to the ground-based aircraft control system;
the ground-based aircraft control system configured to generate aircraft control signals to control the flight of the aircraft, the ground control system comprising:
at least one ground-based receiver/transmitter module configured to transmit the control signals from the ground control system to the aircraft control system, to receive sensor or other data from the aircraft, and to transmit audio signals to the pilot audio system and receive pilot audio; and
a controller including a voice recognition system command module configured to analyze the audio signals to detect predetermined voice commands, to generate the control signals based on detecting the predetermined voice commands in the audio signals, and to transmit to the at least one receiver/transmitter module each of the audio signals and the control signals to transmit to the aircraft.

8. The aircraft control system of claim 7, wherein the controller is further configured to detect a state of a communication mode, to analyze the audio signals to detect the predetermined voice commands, and to transmit the aircraft control signals and the audio signals to the at least one ground-based receiver/transmitter module to transmit to the pilot audio system based on detecting a voice-command recognition state of the communication mode signal.

9. The aircraft control system of claim 7 or 8, wherein the ground-based aircraft control system further comprises:
a voice command recognition headset including a microphone to generate the audio signals based on receiving an acoustic input from a user and a speaker to output audio to the user;
a user interface module including an actuator controllable by the user to select a voice command recognition mode and a non-command voice recognition mode; and
a text-to-speech converter to convert text to speech and including an audible generator to provide audible notifications to the user.

10. A method of communicating with an aircraft, comprising:
detecting a communications mode of a ground-based control system configured to control an aircraft, the aircraft including a pilot audio system to provide acoustic signals to a pilot;
detecting a voice command in an audio signal based on detecting a voice command recognition mode of the ground-based control system;
transmitting both an aircraft control signal and the voice command corresponding to the aircraft control signal to the aircraft based on detecting the voice command; and
transmitting non-command voice communications to the aircraft based on detecting a non-command voice recognition mode of the ground-based control system.

11. The method of claim 10, wherein no aircraft control signals corresponding to the non-command voice communications are transmitted to the aircraft.

12. The method of claim 10 or 11, wherein detecting the voice command communications mode includes determining a physical position of at least one actuator of a user interface module.

13. The method of any of claims 10 to 12, wherein transmitting both the aircraft control signal and the voice command includes transmitting the aircraft control signal via a first data receiver/transmitter antenna and transmitting the voice command via the first data transmission antenna or a second data transmission antenna.

14. The method of claim 13, wherein the second data transmission antenna is a very high frequency (VHF) radio antenna.

15. The method of any of claims 11 to 14 wherein the voice recognition headset contains a speaker to transmit audio from the pilot, from text to speech conversion audio, and audible tones from controller implemented notifications.
